# EUROPÄISCHE PATENTSCHRIFT

(11) **EP 3 553 308 B1**
(45) Veröffentlichungstag und Bekanntmachung des Hinweises auf die Patenterteilung: **21.10.2020**
(21) Anmeldenummer: 19168854.8
(22) Anmeldetag: 12.04.2019
(51) Int. Cl.: F03D 7/04, F03D 80/40

(54) **WINDENERGIEANLAGE, VERFAHREN ZUM BETRIEB EINER WINDENERGIEANLAGE UND COMPUTERPROGRAMMPRODUKT**
WIND TURBINE, METHOD FOR OPERATING A WIND TURBINE AND A COMPUTER PROGRAM PRODUCT
ÉOLIENNE, PROCÉDÉ DE FONCTIONNEMENT D'UNE ÉOLIENNE ET PRODUIT PROGRAMME INFORMATIQUE

(30) Priorität: 12.04.2018 DE 102018002983
(43) Veröffentlichungstag der Anmeldung: 16.10.2019
(73) Patentinhaber: Senvion GmbH, 22297 Hamburg (DE)
(72) Erfinder: Meier, Stefan, 24145 Kiel (DE)
(74) Vertreter: Glawe, Delfs, Moll

(56) Entgegenhaltungen:
- US-A1- 2015 370 236
- US-A1- 2016 171 359
- US-A1- 2017 363 065

## Beschreibung

Die Erfindung betrifft eine Windenergieanlage, ein Verfahren zum Betrieb einer Windenergieanlage sowie ein entsprechendes Computerprogrammprodukt.

Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren -je nach Bauart des Generators auch wenigstens teilweise direkt - in ein elektrisches Netz eingespeist werden kann.

Die Windenergieanlage wird über eine Steuerungseinrichtung gesteuert, die grundsätzlich für einen automatisierten Betrieb der Windenergieanlage ausgebildet ist, wobei Sollwert- und Betriebsvorgaben von übergeordneten Steuerungen sowie sonstige über einen Remote-Zugriff eines Anwenders zugeführte Steuerungsbefehle berücksichtigt werden. Die Steuerungseinrichtung ist dazu grundsätzlich mit einem Datennetzwerk verbunden, über welches Steuerungsbefehle empfangen werden können. Über diese Verbindung können auch Statusmitteilungen von der Steuerungseinrichtung versendet werden.

Bei bestimmten Steuerungsbefehlen ist vorgesehen, dass diese von der Steuerungseinrichtung ausschließlich nur dann ausgeführt werden dürfen, wenn sich der Anwender, der den Steuerungsbefehl abgesetzt hat, unmittelbar am Ort der Windenergieanlage befindet. Ein Beispiel hierfür ist das Zurücksetzen von Statuscodes betreffend den Vereisungszustand einer Windenergieanlage. Diese dürfen durch einen Anwender nur dann per entsprechendem Steuerungsbefehl zurückgesetzt werden, wenn er den Vereisungszustand der Windenergieanlage vor Ort geprüft hat.

Um sicherzustellen, dass sich der Anwender beim Absetzen von Steuerungsbefehlen, für die Entsprechendes vorgesehen ist, auch tatsächlich am Ort der Windenergieanlage befindet, ist es bekannt, dass entsprechende Befehle nur über ein an der Windenergieanlage selbst oder in unmittelbare Nähe dazu vorgesehenes Bedienpanel abgesetzt werden können. Nachteilig hieran ist, dass ein gesondertes Bedienpanel vorgesehen sein muss, welches aufgrund des ansonsten für einen Großteil der Steuerungsbefehle möglichen Remote-Zugriffs grundsätzlich nur in Ausnahmefällen benutzt wird.

Alternativ dazu ist es möglich, Steuerungsbefehle, die gemäß Vorgaben vor Ort der Windenergieanlage abgesetzt werden müssen, von mobilen Kommunikationsendgeräten eines Anwenders zuzulassen, sofern die Position des Kommunikationsendgeräts mit ausreichender Genauigkeit als in der Nähe der Windenergieanlage befindlich ermittelt werden kann.

Wenn bspw. die Windenergieanlage ein lokales WLAN-Netz zur Verfügung stellt, können entsprechende Steuerungsbefehle von einem mobilen Kommunikationsendgerät bspw. dann zugelassen werden, wenn eben dieses mobile Kommunikationsendgerät mit dem lokalen Netz der Windenergieanlage verbunden ist und über diese Verbindung den Steuerungsbefehl absetzt. Die entsprechende Überprüfung kann bspw. anhand der IP-Adresse des mobilen Kommunikationsendgerätes im WLAN-Netz der Windenergieanlage erfolgen. Auch hierfür ist seitens der Windenergieanlage jedoch eine zusätzliche Komponente erforderlich, die insbesondere aufgrund der erforderlichen Überwachung und regelmäßigen Aktualisierung ihrer Schutzmaßnahmen vor unbefugten Zugriffen auf das WLAN-Netz der Windenergieanlage kostenintensiv ist.

Auch ist es grundsätzlich möglich, die Position des mobilen Kommunikationsendgerätes eines Nutzers über Satellitennavigationssysteme, wie GPS, GALILEO oder GLONASS, festzustellen, und nur solche Steuerungsbefehle, die gemäß Vorgaben vor Ort der Windenergieanlage abgesetzt werden müssen, zuzulassen, die von mobilen Kommunikationsendgeräten stammen, deren Position gemäß Satellitennavigation nahe bei der jeweiligen Windenergieanlage ist. Allerdings lässt sich die über Satellitennavigation bestimmte Position eines mobilen Kommunikationsendgerätes in diesem leicht verändern und so anpassen, dass die als in der Nähe einer Windenergieanlage befindliche angegebene Position eines mobilen Kommunikationsendgerätes keineswegs mit der tatsächlich physikalischen Position des Kommunikationsendgerätes übereinstimmt.

US2017/363065A1 offenbart ein Verfahren zum Autorisieren von Benutzern für Steuerzugriffe auf eine Windenergieanlage.

Aufgabe der vorliegenden Erfindung ist es, eine Windenergieanlage, ein Verfahren und ein Computerprogrammprodukt zu schaffen, bei denen die Nachteile aus dem Stand der Technik nicht mehr oder nur noch in vermindertem Umfang auftreten können.

Gelöst wird diese Aufgabe durch eine Windenergieanlage gemäß dem Hauptanspruch, ein Verfahren gemäß Anspruch 10 sowie ein Computerprogrammprodukt gemäß Anspruch 15. Vorteilhafte Weiterbildungen sind Gegenstand der abhängigen Ansprüche.

Demnach betrifft die Erfindung eine Windenergieanlage umfassend einen Rotor mit mehreren Rotorblättern, der drehbar an einer drehbar auf einem Turm angeordneten Gondel angeordnet und mit einem in der Gondel angeordneten Generator zur Umwandlung von auf den Rotor einwirkenden Windenergie in elektrische Energie verbunden ist, und eine Steuerungseinrichtung zur Steuerung der Windenergieanlage, wobei die Steuerungseinrichtung zum Empfang von Steuerungsbefehlen und zum Versenden von Statusmitteilungen mit einem Datennetzwerk verbunden ist, wobei an der Windenergieanlage eine mit der Steuerungseinrichtung zur Ausgabe eines inkonstanten und verfallenden Bestätigungscodes verbundene Anzeigeeinheit vorgesehen ist und die Steuerungseinrichtung dazu ausgebildet ist, bestimmte über das Datennetzwerk erhaltene, zu bestätigende Steuerungsbefehle nur umzusetzen, wenn die empfangenen Steuerungsbefehle durch Empfang eines über die Anzeigeeinheit ausgegebenen noch gültigen Bestätigungscodes über das Datennetzwerk bestätigt ist.

Weiterhin betrifft die Erfindung ein Verfahren zum Betrieb einer Windenergieanlage umfassend eine mit einem Datennetzwerk und einer Anzeigevorrichtung verbundene Steuerungseinrichtung, mit den Schritten:
- Generieren eines inkonstanten und verfallenden Bestätigungscodes durch die Steuerungseinrichtung und Ausgabe des generierten Bestätigungscodes auf der Anzeigeeinheit; und
- Bei Empfang eines zu bestätigenden Steuerungsbefehls durch die Steuerungseinrichtung überprüft wird, ob der Steuerungsbefehl durch Empfang eines zuvor über die Anzeigeeinheit ausgegebenen noch gültigen Bestätigungscodes über das Datennetzwerk bestätigt wird, und wenn ja, der Steuerungsbefehl durch die Steuerungseinrichtung umgesetzt wird.

Außerdem betrifft die Erfindung ein Computerprogrammprodukt umfassend Programmteile, welche, wenn geladen in einem Computer, vorzugsweise eine Steuerungseinrichtung einer Windenergieanlage, zur Durchführung des erfindungsgemäßen Verfahrens ausgelegt sind.

Bei der erfindungsgemäße Lösung kann mit gegenüber dem Stand der Technik einfachen Mitteln überprüft werden, dass ein über ein mobiles Kommunikationsendgerät eines Anwenders abgesetzter Steuerungsbefehl, der gemäß Vorgaben vor Ort der Windenergieanlage abgesetzt werden muss, tatsächlich vor Ort der fraglichen Windenergieanlage abgesetzt wurde. Die Überprüfung erfolgt anhand eines von dem Anwender in Zusammenhang mit einem entsprechenden Steuerungsbefehl über das Datennetzwerk, mit dem die Steuerungseinrichtung verbunden ist, zu übermittelnden Bestätigungscode, der ausschließlich auf einer unmittelbar an der Windenergieanlage angeordneten Anzeigeeinrichtung angezeigt wird. Der Anwender muss, damit ein entsprechender Steuerungsbefehl von der Steuerungseinrichtung auch tatsächlich umgesetzt wird, unmittelbar vor Ort sein, um den angezeigten inkonstanten und verfallenden Bestätigungscode von der Anzeigeeinheit ablesen und in Zusammenhang mit dem Steuerungsbefehl über sein mobiles Kommunikationsendgerät an die Steuerungseinrichtung absenden zu können. "Inkonstant" bedeutet in diesem Zusammenhang, dass sich der Bestätigungscode regelmäßig und/oder hervorgerufen durch vorgegebene Ereignisse ändert. "Verfallend" bedeutet, dass ein Bestätigungscode nach einer vorgegebenen Zeit und/oder nach Eintritt eines jeweils vorgegebenen Ereignisses seine Gültigkeit verliert und von der Steuerungseinrichtung nicht mehr zur Bestätigung eines Steuerungsbefehls akzeptiert wird.

Indem der Bestätigungscode nicht gleichbleibend ist und nach einiger Zeit verfällt, wird zuverlässig ausgeschlossen, dass ein Anwender, nachdem er einen Bestätigungscode vor Ort der Windenergieanlage abgelesen hat, in der Folge Steuerungsbefehle mit demselben Bestätigungscode bestätigen kann, auch wenn er sich gar nicht mehr vor Ort der Windenergieanlage befindet.

Um die Erfindung umzusetzen, ist an einer Windenergieanlage eine mit der Steuerungseinrichtung verbundene Anzeigevorrichtung erforderlich. Diese Anzeigevorrichtung kann - wie nachfolgend ersichtlich - sehr einfach und kostengünstig ausgeführt sein. Auch ist es möglich, dass es sich bei der Anzeigevorrichtung um eine aus anderen Gründen bereits vorhandene Anzeigevorrichtung in der Windenergieanlage handeln kann, auf der zusätzlich zu den originär vorgesehenen Information noch der erfindungsgemäße Bestätigungscode ausgegeben werden kann.

Außerdem ist die Steuerungseinrichtung erfindungsgemäß auszubilden. Steuerungsvorrichtungen für Windenergieanlagen umfassen jedoch regelmäßig speicherprogrammierbare Steuerungen, sodass die Erfindung regelmäßig auf bereits vorhandenen und/oder üblichen Steuerungseinrichtungen für Windenergieanlagen durch geeignete Programmierung implementiert werden kann. Die erfindungsgemäße Lösung stellt keine besonderen Anforderungen an die Rechenkapazität der Steuerungseinrichtung und kann somit in der Regel zu bestehenden Programmierungen einer Steuerungseinrichtung hinzugefügt werden.

Mithilfe der Erfindung, bei der sämtliche Steuerungsbefehle - auch solche die nur vor Ort abgesetzt werden dürfen - über das Datennetzwerk an die Steuerungseinrichtung der Windenergieanlage übertragen werden, kann gegenüber dem Stand der Technik auf ein Bedienerterminal, welches neben einem Display zwingend auch noch Eingabegeräte erfordert, ebenso verzichtet werden, wie auf einen WLAN-Zugangspunkt. Indem zumindest für die vorliegende Erfindung kein unmittelbares Eingabegerät oder Dateninterface an der Windenergieanlage selbst erforderlich ist, besteht auch keine Gefahr eines unberechtigten Zugriffs über ein entsprechendes Eingabegerät bzw. Dateninterface. Die Verbindung der Steuerungseinrichtung zum Datennetzwerk ist auf übliche Weise zu sichern - besondere zusätzliche Sicherheitsanforderungen diesbezüglich erwachsen aus der Erfindung nicht.

Es ist bevorzugt, wenn die Steuerungseinrichtung dazu ausgebildet ist, in regelmäßigen Zeitintervallen einen neuen Bestätigungscode zu generieren und auf der Anzeigeeinheit auszugeben. Ein Steuerungsbefehl kann dann grundsätzlich nur durch den momentan angezeigten Bestätigungscode bestätigt werden. In diesem Fall verfällt ein Bestätigungscode also nach dem vorgegebenen Zeitintervall, nach dem ein neuer Bestätigungscode erzeugt wird. Ein entsprechendes Zeitintervall kann bspw. zwischen 10 Sekunden und 10 Minuten liegen, vorzugsweise bspw. 30 Sekunden betragen.

Um zu verhindern, dass ein Steuerungsbefehl wegen einem ungültigen Bestätigungscode abgelehnt wird, weil während der Eingabe eines Bestätigungscodes durch den Anwender an seinem mobilen Kommunikationsendgerät aufgrund einer Zeitvorgabe bereits ein neuer Bestätigungscode generiert und angezeigt wird, kann es bevorzugt sein, wenn auch der vor der Generierung eines neuen Bestätigungscodes aufgrund einer Zeitvorgabe angezeigten Bestätigungscode noch als gültig für die Bestätigung eines Steuerungsbefehls angesehen wird. In diesem Fall verfällt ein Bestätigungscode also bspw. erst nach zwei Zeitintervallen nach seiner Generierung.

Es ist bevorzugt, wenn die Steuerungseinrichtung dazu ausgebildet ist, bei Empfang eines Bestätigungscodes über das Datennetzwerk einen neuen Bestätigungscode zu generieren und auf der Anzeigeeinheit auszugeben. Insbesondere wenn die Steuerungseinrichtung weiterhin dazu ausgebildet ist, zur Bestätigung eines Steuerungsbefehls nach der Generierung eines neuen Bestätigungscodes aufgrund des Empfangs eines Bestätigungscodes nur den momentan angezeigten Bestätigungscode als gültig zu erachten, wird sichergestellt, dass ein Bestätigungscode nur zur Bestätigung eines einzelnen Steuerungsbefehls verwendet werden kann und für evtl. nachfolgende Steuerungsbefehle bei Bedarf ein neu generierter Bestätigungscode erforderlich ist. In anderen Worten verfällt ein Bestätigungscode in diesem Fall mit seiner einmaligen Verwendung.

Es ist selbstverständlich möglich, die vorstehenden Varianten zur Neugenerierung eines Bestätigungscodes zu kombinieren, also einen neuen Bestätigungscode grundsätzlich in regelmäßigen Zeitintervallen, zusätzlich aber auch bei der Verwendung eines gültigen Bestätigungscodes neu zu generieren.

Es ist auch möglich, dass die Steuerungseinrichtung dazu ausgebildet ist ausschließlich dann ein Bestätigungscode auf der Anzeigevorrichtung auszugeben, wenn ein zu bestätigender Steuerungsbefehl empfangen wurde, wobei der Steuerungsbefehl dann als bestätigt gilt, wenn der Bestätigungscode innerhalb einer vorgegebenen Zeitspanne über das Datennetzwerk von der Steuerungseinrichtung empfangen wird. Auch in diesem Fall muss der Anwender vor Ort der Windenergieanlage sein, um den für einen bestimmten Steuerungsbefehl erzeugten Bestätigungscode von der Anzeigeeinrichtung ablesen und an die Steuerungsvorrichtung übermitteln zu können.

Die Steuerungseinrichtung ist vorzugsweise derart ausgebildet, dass der Steuerungsbefehl als bestätigt gilt, wenn der Bestätigungscode gleichzeitig oder innerhalb einer vorgegebenen Zeitspanne ab Empfang des Steuerungsbefehls von der Steuerungseinrichtung empfangen wird. Je nach Ausgestaltung kann vorgesehen sein, dass ein mobiles Kommunikationsendgerät einen zu bestätigenden Steuerungsbefehl nur dann an die Steuerungseinrichtung übermittelt, wenn am mobilen Kommunikationsendgerät tatsächlich ein Bestätigungscode eingegeben wird. Dadurch kann bereits beim mobilen Kommunikationsendgerät das Absenden von Steuerungsbefehlen verhindert werden, die mangels Angabe eines Bestätigungscodes unzweifelhaft nicht umgesetzt werden; die tatsächliche Gültigkeit eines eingegebenen Bestätigungscodes wird dabei weiterhin durch die Steuerungseinrichtung überprüft.

In anderen Ausgestaltungen ist möglich, dass Steuerungsbefehl und Bestätigungscode - selbst wenn sie gleichzeitig eingegeben werden sollten - nicht gleichzeitig vom mobilen Kommunikationsendgerät versandt werden. In diesem Fall kann ein Steuerungsbefehl auch dann noch als bestätigt gelten, wenn innerhalb einer vorgegebenen Zeitspanne ein gültiger Bestätigungscode von der Steuerungseinrichtung empfangen wird. Insbesondere wenn Steuerungsbefehl und Bestätigungscode getrennt versandt bzw. empfangen werden, kann eine zusätzliche Prüfung erfolgen, ob Steuerungsbefehl und Bestätigungscode von demselben mobilen Kommunikationsendgerät abgeschickt wurden. Eine entsprechende Überprüfung kann bspw. anhand einer eindeutigen Adresse des mobilen Kommunikationsendgerätes, bspw. einer IP- oder MAC-Adresse, erfolgen, wenn diese jeweils zusammen mit dem Steuerungsbefehl und dem Bestätigungscode an die Steuerungseinrichtung übermittelt werden.

Die Steuerungseinrichtung kann einen Zufallsgenerator zur Erzeugung eines zufälligen alpha-numerischen, vorzugsweise rein numerischen Bestätigungscode umfassen. Um sicherzustellen, dass die vom Zufallsgenerator erzeugten Bestätigungscodes tatsächlich zufällig sind, kann der Zufallsgenerator mit einem von der Steuerungseinrichtung empfangenen Sensorwert als Startwert initialisiert werden. Aufgrund des grundsätzlichen Rauschens von Sensoren ist der so ermittelte Startwert als tatsächlich zufällig anzusehen, weshalb auch die darauf basierenden, vom Zufallsgenerator erzeugten Bestätigungscodes als tatsächlich zufällig gelten können.

Es ist bevorzugt, wenn die Anzeigeeinheit im Innern des Turms der Windenergieanlage angeordnet ist. Dadurch kann sichergestellt werden, dass sich ein Anwender nicht nur in der Nähe der Windenergieanlage, sondern unmittelbar in der Windenergieanlage befindet, wenn er einen zu bestätigenden Steuerungsbefehl absetzt, um den dafür erforderlichen Bestätigungscode ablesen zu können.

Insbesondere wenn der Bestätigungscode rein numerisch ist, ist es ausreichend, wenn die Anzeigeeinheit 7-Segment-Anzeigen zur Ausgabe des Bestätigungscodes umfasst. Entsprechende Anzeigeelemente sind äußerst kostengünstig und gleichzeitig zuverlässig im Betrieb.

Es wird darauf hingewiesen, dass sich die vorstehende Beschreibung auf solche Steuerungsbefehle bezieht, für die vorgeschrieben ist, dass sich nur von vor Ort der Windenergieanlage befindlichen Anwendern abgesetzt werden. Andere Steuerungsbefehle, die Entsprechendes nicht erfordern, können weiterhin auf gewohnte Weise über das Datennetzwerk an die Steuerungseinrichtung der Windenergieanlage übermittelt werden und werden von dieser umgesetzt, ohne das es hierfür auf die Übermittlung eines erfindungsgemäßen Bestätigungscodes ankäme.

Bei dem mobilen Kommunikationsendgerät handelt es sich um ein Endgerät mit einer mobilen Kommunikationsverbindungsmöglichkeit zum Senden von Steuerungsbefehlen, die letztendlich über das Datennetz von der Steuerungseinrichtung empfangen werden. Dabei ist unerheblich, ob die Kommunikationsverbindung direkt und ausschließlich über das Datennetz oder aber unter Zwischenschaltung weiterer Netze, Server o.ä. erfolgt. Bei dem mobilen Kommunikationsendgerät kann es sich bspw. um ein Smartphone, Tablet oder einen Mobilcomputer handeln, die sich bspw. über ein Mobilfunknetz mit dem Internet verbinden können.

Zur Erläuterung des erfindungsgemäßen Verfahrens und des erfindungsgemäßen Computerprogrammprodukts wird auf die vorstehenden Ausführungen verwiesen.

Die Erfindung wird nun anhand eines Ausführungsbeispiels unter Bezugnahme auf die beigefügten Zeichnungen beispielhaft beschrieben. Es zeigen:

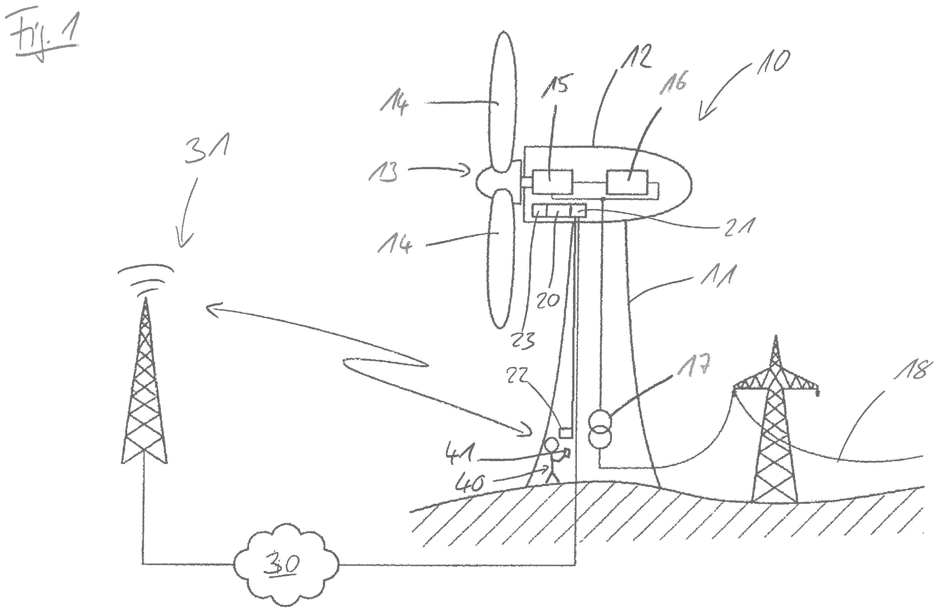

- Figur 1:: ein erstes Ausführungsbeispiel einer erfindungsgemäßen Windenergieanlage.

In Figur 1 ist schematisch eine erfindungsgemäße Windenergieanlage 10 dargestellt.

Die Windenergieanlage 10 umfasst zur Umwandlung von Windenergie in elektrische Energie einen an einer drehbar auf einem Turm 11 gelagerten Gondel 12 befestigten Rotor 13 mit drei hinsichtlich ihres Blattwinkels einstellbaren Rotorblättern 14. Der Rotor 13 treibt einen Generator 15 an. Die vom Generator 15 kommende elektrische Leistung wird zumindest teilweise über einen Umrichter 16 und einen Transformator 17 umgewandelt, um in ein Hoch- oder Mittelspannungsnetz 18 eingespeist zu werden. Die Umwandlung erfolgt so, dass die elektrische Leistung hinsichtlich der Spannungsamplitude, Frequenz und Phasenverschiebung den Anforderungen des Hoch- oder Mittelspannungsnetzes 18 genügt.

Zur Steuerung der Windenergieanlage 10 ist eine Steuerungseinrichtung 20 vorgesehen, welche über nicht dargestellte Steuerleitungen mit den einzelnen Komponenten der Windenergieanlage 10 sowie diversen (nicht dargestellten) Sensoren verbunden ist. Die Steuerungseinrichtung 20 kann so auf die Komponenten der Windenergieanlage 10 einwirken, dass die Windenergieanlage 10 an einem gewünschten Betriebspunkt betrieben wird und die elektrische Energie gemäß den Anforderungen des Netzes 18 eingespeist wird. Die Steuerungseinrichtung 20 steuert die Windenergieanlage 10 basierend auf den über die Sensoren erfassten Messwerten und errechneten oder vorgegebenen Sollwerten. Weiterhin weist die Steuerungseinrichtung 20 eine Kommunikationseinheit 21, die mit dem Internet 30 verbunden ist. Über das Internet 30 erhält die Steuerungseinrichtung 20 Sollwertvorgaben (bspw. vom Betreiber des Netzes 18) und/oder andere Steuerungsbefehle, die unmittelbar in die Steuerung der Windenergieanlage 10 einfließen.

Am Fuß des Turms 11 der Windenergieanlage 10 ist weiterhin eine mit der Steuerungseinrichtung 20 verbundene Anzeigevorrichtung 22 umfassend sechs nebeneinander angeordnete 7-Segment-Anzeigen vorgesehen. Außerdem verfügt die Steuerungseinrichtung 20 noch über einen Zufallsgenerator 23. Die Steuerungseinrichtung 20 ist dazu ausgebildet, in festgelegten Zeitintervallen von 30 Sekunden mithilfe des Zufallsgenerators 23 einen sechsstelligen, rein numerischen Bestätigungscode zu erzeugen und diesen auf der Anzeigevorrichtung 22 anzuzeigen.

In der Steuerungseinrichtung 20 ist eine Liste von Steuerungsbefehlen hinterlegt, die nur dann ausgeführt werden dürfen, wenn die entsprechenden Steuerungsbefehle, selbst wenn sie über das Internet 30 empfangen werden, vor Ort der Windenergieanlage 10 abgesetzt werden, tatsächlich umgesetzt werden dürfen. Ein Beispiel für einen entsprechenden Steuerungsbefehl ist der Befehl zum Zurücksetzen der Statuscodes betreffend den Vereisungszustand der Windenergieanlage 10. Sämtliche von der Steuerungseinheit 20 über das Internet 30 empfangene Steuerungsbefehle, die sich nicht auf dieser Liste wiederfinden, werden gemäß dem Stand der Technik geprüft und umgesetzt.

Steuerungsbefehle, die sich auf der fraglichen Liste befinden, werden - vorbehaltlich evtl. weiterer Prüfungen - von der Steuerungseinheit 20 ausschließlich nur dann umgesetzt, wenn zusammen mit dem eigentlichen Steuerungsbefehl ein Bestätigungscode empfangen wird, der einem in den letzten 60 Sekunden vor dem Empfang des Steuerungsbefehls auf der Anzeigeeinrichtung 22 angezeigten Bestätigungscode entspricht.

Ein Anwender 40, der einen entsprechenden Steuerungsbefehl an die Steuerungseinrichtung 20 der Windenergieanlage 10 absetzen möchte, muss sich daher unmittelbar vor Ort der Windenergieanlage 10 - genauer im Fuße des Turms 11 befinden - um den dafür erforderlichen Bestätigungscode von der Anzeigeeinrichtung 22 ablesen zu können.

Zum Absetzen des Steuerungsbefehls zusammen mit dem Bestätigungscode verfügt der Anwender 40 über ein mobiles Kommunikationsendgerät 41, welches über ein Mobilfunknetz 31 mit dem Internet 30 verbunden ist. Der Anwender 40 wählt auf seinem Kommunikationsendgerät 41 den abzusetzenden Steuerungsbefehl aus und gibt unmittelbar anschließend den Bestätigungscode, der ihm auf der Anzeigeeinrichtung 22 angezeigt wird, in das Kommunikationsendgerät 41 ein, woraufhin der Steuerungsbefehl zusammen mit dem Bestätigungscode über das Mobilfunknetz 31 und das Internet 30 an die Steuerungseinrichtung 20 übermittelt wird. Dort wird - da es sich bei dem Steuerungsbefehl um einen solchen handelt, der eine Bestätigung erfordert, dass er vor Ort der Windenergieanlage 10 abgesetzt wurde - überprüft, ob der mit dem Steuerungsbefehl mitübersandte Bestätigungscode dem momentan auf der Anzeigevorrichtung 22 angezeigten Bestätigungscode oder dem unmittelbar davor angezeigten Bestätigungscode entspricht. Ist dies der Fall, kann davon ausgegangen werden, dass der Steuerungsbefehl tatsächlich vor Ort der Windenergieanlage 10 abgesetzt wurde, woraufhin der Steuerungsbefehl dann von der Steuerungsvorrichtung 20 umgesetzt wird.

## Patentansprüche

1. Windenergieanlage (10) umfassend einen Rotor (13) mit mehreren Rotorblättern (14), der drehbar an einer drehbar auf einem Turm (11) angeordneten Gondel (12) angeordnet und mit einem in der Gondel (12) angeordneten Generator (15) zur Umwandlung von auf den Rotor (13) einwirkenden Windenergie in elektrische Energie verbunden ist, und eine Steuerungseinrichtung (20) zur Steuerung der Windenergieanlage (10), wobei die Steuerungseinrichtung (20) zum Empfang von Steuerungsbefehlen und zum Versenden von Statusmitteilungen mit einem Datennetzwerk (30) verbunden ist,
**dadurch gekennzeichnet, dass**
an der Windenergieanlage (10) eine mit der Steuerungseinrichtung (20) zur Ausgabe eines inkonstanten und verfallenden Bestätigungscodes verbundene Anzeigeeinheit (22) vorgesehen ist und die Steuerungseinrichtung (20) dazu ausgebildet ist, bestimmte über das Datennetzwerk (30) erhaltene, zu bestätigende Steuerungsbefehle nur umzusetzen, wenn die empfangenen Steuerungsbefehle durch Empfang eines über die Anzeigeeinheit (22) ausgegebenen noch gültigen Bestätigungscodes über das Datennetzwerk (30) bestätigt ist.

2. Windenergieanlage nach Anspruch 1,
**dadurch gekennzeichnet, dass**
die Steuerungseinrichtung (20) dazu ausgebildet ist, in regelmäßigen Zeitintervallen einen neuen Bestätigungscode zu generieren und auf der Anzeigeeinheit (22) auszugeben, wobei ein Steuerungsbefehl nur durch den momentan angezeigten Bestätigungscode und vorzugsweise den vor der Generierung eines neuen Bestätigungscodes aufgrund einer Zeitvorgabe angezeigten Bestätigungscode bestätigt werden kann.

3. Windenergieanlage nach Anspruch 1 oder 2,
**dadurch gekennzeichnet, dass**
die Steuerungseinrichtung (20) dazu ausgebildet ist, bei Empfang eines Bestätigungscodes über das Datennetzwerk (30) einen neuen Bestätigungscode zu generieren und auf der Anzeigeeinheit (22) auszugeben, wobei ein Steuerungsbefehl vorzugsweise nach der Generierung eines neuen Bestätigungscodes aufgrund des Empfangs eines Bestätigungscodes nur durch den momentan angezeigten Bestätigungscode bestätigt werden kann.

4. Windenergieanlage nach Anspruch 1,
**dadurch gekennzeichnet, dass**
die Steuerungseinrichtung (20) dazu ausgebildet ist, einen Bestätigungscode auf Empfang eines zu bestätigenden Steuerungsbefehls hin auszugeben, wobei der Steuerungsbefehl als bestätigt gilt, wenn der Bestätigungscode innerhalb einer vorgegebenen Zeitspanne von der Steuerungseinrichtung (30) über das Datennetzwerk (30) empfangen wird.

5. Windenergieanlage nach einem der vorhergehenden Ansprüche,
**dadurch gekennzeichnet, dass**
die Steuerungseinrichtung (20) derart ausgebildet ist, dass Steuerungsbefehl als bestätigt gilt, wenn der Bestätigungscode gleichzeitig oder innerhalb eines vorgegebenen Zeitraums ab Empfang des Steuerungsbefehls von der Steuerungseinrichtung (20) empfangen wird.

6. Windenergieanlage nach einem der vorhergehenden Ansprüche,
**dadurch gekennzeichnet, dass**
die Steuerungseinrichtung (20) einen Zufallsgenerator (23) zur Erzeugung eines zufälligen alpha-numerischen, vorzugsweise rein numerischen Bestätigungscode umfasst.

7. Windenergieanlage nach Anspruch 6,
**dadurch gekennzeichnet, dass**
der Zufallsgenerator (23) mit einem von der Steuerungseinrichtung (20) empfangenen Sensorwert als Startwert initialisiert wird.

8. Windenergieanlage nach einem der vorhergehenden Ansprüche,
**dadurch gekennzeichnet, dass**
die Anzeigeeinheit (22) im Innern des Turms der Windenergieanlage angeordnet ist.

9. Windenergieanlage nach einem der vorhergehenden Ansprüche,
**dadurch gekennzeichnet, dass**
die Anzeigeeinheit (22) wenigstens eine 7-Segment-Anzeige zur Ausgabe des Bestätigungscodes umfasst.

10. Verfahren zum Betrieb einer Windenergieanlage (10) umfassend eine mit einem Datennetzwerk (30) und einer Anzeigevorrichtung (22) verbundenen Steuerungseinrichtung (20), mit den Schritten:
- Generieren eines inkonstanten und verfallenden Bestätigungscodes durch die Steuerungseinrichtung (20) und Ausgabe des generierten Bestätigungscodes auf der Anzeigeeinheit (22); und
- Bei Empfang eines zu bestätigenden Steuerungsbefehls durch die Steuerungseinrichtung (20), Überprüfen durch die Steuerungsvorrichtung (20), ob der Steuerungsbefehl durch Empfang eines zuvor über die Anzeigeeinheit (22) ausgegebenen noch gültigen Bestätigungscodes über das Datennetzwerk (30) bestätigt wird, und
wenn ja, Umsetzen des Steuerungsbefehls durch die Steuerungseinrichtung (20).

11. Verfahren nach Anspruch 10,
**dadurch gekennzeichnet, dass**
in regelmäßigen Zeitintervallen einen neuen Bestätigungscode generiert und auf der Anzeigeeinheit (22) ausgegeben wird, wobei ein Steuerungsbefehl nur durch den momentan angezeigten Bestätigungscode und vorzugsweise den vor der Generierung eines neuen Bestätigungscodes aufgrund einer Zeitvorgabe angezeigten Bestätigungscode bestätigt werden kann.

12. Verfahren nach Anspruch 10 oder 11,
**dadurch gekennzeichnet, dass**
bei Empfang eines Bestätigungscodes durch die Steuerungseinrichtung (20) über das Datennetzwerk (30) ein neuer Bestätigungscode generiert und auf der Anzeigeeinheit (22) ausgeben wird, wobei ein Steuerungsbefehl vorzugsweise nach der Generierung eines neuen Bestätigungscodes aufgrund des Empfangs eines Bestätigungscodes nur durch den momentan angezeigten Bestätigungscode bestätigt werden kann.

13. Verfahren nach einem der Ansprüche 10 bis 12,
**dadurch gekennzeichnet, dass**
ein Bestätigungscode auf Empfang eines zu bestätigenden Steuerungsbefehls durch die Steuerungseinrichtung (20) auf der Anzeigeeinheit (22) hin ausgegeben wird, wobei der Steuerungsbefehl als bestätigt gilt, wenn der Bestätigungscode innerhalb einer vorgegebenen Zeitspanne von der Steuerungseinrichtung (30) über das Datennetzwerk (30) empfangen wird.

14. Verfahren nach einem der Ansprüche 10 bis 13,
**dadurch gekennzeichnet, dass**
ein Steuerungsbefehl als bestätigt gilt, wenn der Bestätigungscode gleichzeitig oder innerhalb eines vorgegebenen Zeitraums ab Empfang des Steuerungsbefehls von der Steuerungseinrichtung (20) empfangen wird.

15. Computerprogrammprodukt umfassend Programmteile, welche, wenn geladen in einem Computer, vorzugsweise eine Steuerungseinrichtung (20) einer Windenergieanlage (10), zur Durchführung des Verfahrens nach einem der Ansprüche 10 bis 14 ausgelegt sind.

## Claims

1. Wind energy installation (10) comprising a rotor (13) with a plurality of rotor blades (14), which is rotatably arranged on a nacelle (12) rotatably arranged on a tower (11) and is connected to a generator (15) arranged in the nacelle (12) for the purpose of converting wind energy acting on the rotor (13) into electrical energy, and a control device (20) for controlling the wind energy installation (10), wherein the control device (20) is connected to a data network (30) for the purpose of receiving control commands and transmitting status notifications,
**characterized in that**
a display unit (22) which is connected to the control device (20) for the purpose of outputting an inconstant and expiring confirmation code is provided on the wind energy installation (10), and the control device (20) is designed to implement particular control commands to be confirmed which are received via the data network (30) only if the received control commands have been confirmed by receiving a confirmation code, which is still valid and has been output via the display unit (22), via the data network (30).

2. Wind energy installation according to Claim 1,
**characterized in that**
the control device (20) is designed to generate a new confirmation code and to output it on the display unit (22) at regular intervals of time, wherein a control command can be confirmed only by the currently displayed confirmation code and preferably the confirmation code displayed before the generation of a new confirmation code on the basis of a time specification.

3. Wind energy installation according to Claim 1 or 2,
**characterized in that**
the control device (20) is designed, upon receiving a confirmation code via the data network (30), to generate a new confirmation code and to output it on the display unit (22), wherein a control command can be confirmed only by the currently displayed confirmation code, preferably after the generation of a new confirmation code on account of the reception of a confirmation code.

4. Wind energy installation according to Claim 1,
**characterized in that**
the control device (20) is designed to output a confirmation code in response to the reception of a control command to be confirmed, wherein the control command is considered to be confirmed if the confirmation code is received by the control device (30) via the data network (30) within a predefined period.

5. Wind energy installation according to one of the preceding claims,
**characterized in that**
the control device (20) is designed in such a manner that the control command is considered to be confirmed if the confirmation code is received by the control device (20) at the same time as or within a predefined period after receiving the control command.

6. Wind energy installation according to one of the preceding claims,
**characterized in that**
the control device (20) comprises a random number generator (23) for generating a random alpha-numeric, preferably purely numeric, confirmation code.

7. Wind energy installation according to Claim 6,
**characterized in that**
the random number generator (23) is initialized with a sensor value received by the control device (20) as a starting value.

8. Wind energy installation according to one of the preceding claims,
**characterized in that**
the display unit (22) is arranged inside the tower of the wind energy installation.

9. Wind energy installation according to one of the preceding claims,
**characterized in that**
the display unit (22) comprises at least one seven-segment display for outputting the confirmation code.

10. Method for operating a wind energy installation (10) comprising a control device (20) connected to a data network (30) and to a display apparatus (22), having the steps of:
- generating an inconstant and expiring confirmation code by means of the control device (20) and outputting the generated confirmation code on the display unit (22); and
- upon receiving a control command to be confirmed by means of the control device (20), checking, by means of the control apparatus (20), whether the control command is confirmed by receiving a confirmation code, which is still valid and was previously output via the display unit (22), via the data network (30), and
if so, implementing the control command by means of the control device (20).

11. Method according to Claim 10,
**characterized in that**
a new confirmation code is generated and output on the display unit (22) at regular intervals of time, wherein a control command can be confirmed only by the currently displayed confirmation code and preferably the confirmation code displayed before the generation of a new confirmation code on the basis of a time specification.

12. Method according to Claim 10 or 11,
**characterized in that**
upon receiving a confirmation code by means of the control device (20) via the data network (30), a new confirmation code is generated and output on the display unit (22), wherein a control command can be confirmed only by the currently displayed confirmation code, preferably after the generation of a new confirmation code on account of the reception of a confirmation code.

13. Method according to one of Claims 10 to 12,
**characterized in that**
a confirmation code is output on the display unit (22) in response to the reception of a control command to be confirmed by means of the control device (20), wherein the control command is considered to be confirmed if the confirmation code is received by the control device (30) via the data network (30) within a predefined period.

14. Method according to one of Claims 10 to 13,
**characterized in that**
a control command is considered to be confirmed if the confirmation code is received by the control device (20) at the same time as or within a predefined period after receiving the control command.

15. Computer program product comprising program parts which, when loaded into a computer, preferably a control device (20) of a wind energy installation (10), are designed to carry out the method according to one of Claims 10 to 14.

## Revendications

1. Éolienne (10) comprenant un rotor (13) muni de plusieurs pales de rotor (14), qui est monté à rotation sur une nacelle (12) montée à rotation sur une tour (11) et qui est relié à un générateur (15) disposé dans la nacelle (12) pour convertir l'énergie éolienne agissant sur le rotor (13) en énergie électrique, et un dispositif de commande (20) destiné à commander l'éolienne (10), dans laquelle ledit dispositif de commande (20) est relié à un réseau de données (30) destiné à recevoir des instructions de commande et à envoyer des messages d'état,
**caractérisée en ce qu'**il est prévu sur l'éolienne (10) une unité d'affichage (22), reliée au dispositif de commande (20) et destinée à délivrer un code de confirmation incohérent et venant à expiration, et **en ce que** le dispositif de commande (20) est conçu pour exécuter des instructions de commande déterminées reçues par l'intermédiaire du réseau de données (30) et devant être confirmées uniquement lorsque les instructions de commande reçues sont confirmées par la réception, par l'intermédiaire du réseau de données (30), d'un code de confirmation encore valable délivré par l'intermédiaire de l'unité d'affichage (22).

2. Éolienne selon la revendication 1,
**caractérisée en ce que** le dispositif de commande (20) est conçu pour générer un nouveau code de confirmation à intervalles de temps réguliers et pour le délivrer sur l'unité d'affichage (22), dans laquelle une instruction de commande ne peut être confirmée que par le code de confirmation actuellement affiché et, de préférence, par le code de confirmation affiché avant la génération d'un nouveau code de confirmation sur la base d'une spécification de temps.

3. Éolienne selon la revendication 1 ou 2,
**caractérisée en ce que** le dispositif de commande (20) est conçu pour générer un nouveau code de confirmation par l'intermédiaire du réseau de données (30) lors de la réception d'un code de confirmation et pour le délivrer sur l'unité d'affichage (22), dans laquelle une instruction de commande ne peut être confirmée, de préférence après la génération d'un nouveau code de confirmation sur la base de la réception d'un code de confirmation, que par le code de confirmation actuellement affiché.

4. Éolienne selon la revendication 1,
**caractérisée en ce que** le dispositif de commande (20) est conçu pour délivrer un code de confirmation lors de la réception d'une instruction de commande devant être confirmée, dans laquelle l'instruction de commande est considérée comme étant confirmée lorsque le code de confirmation est reçu par le dispositif de commande (30) par l'intermédiaire du réseau de données (30) en moins d'une période de temps prédéterminée.

5. Éolienne selon l'une des revendications précédentes,
**caractérisée en ce que** le dispositif de commande (20) est conçu de telle manière que l'instruction de commande est considérée comme étant confirmée lorsque le code de confirmation est reçu par le dispositif de commande (20) en même temps ou en moins d'une période de temps prédéterminée par rapport à la réception de l'instruction de commande.

6. Éolienne selon l'une des revendications précédentes,
**caractérisée en ce que** le dispositif de commande (20) comprend un générateur aléatoire (23) destiné à générer un code de confirmation alphanumérique aléatoire, de préférence purement numérique.

7. Éolienne selon la revendication 6,
**caractérisée en ce que** le générateur aléatoire (23) est initialisé avec une valeur de capteur reçue en provenance du dispositif de commande (20) en tant que valeur de départ.

8. Éolienne selon l'une des revendications précédentes,
**caractérisée en ce que** l'unité d'affichage (22) est disposée à l'intérieur de la tour de l'éolienne.

9. Éolienne selon l'une des revendications précédentes,
**caractérisée en ce que** l'unité d'affichage (22) comprend au moins un afficheur à 7 segments destiné à délivrer le code de confirmation.

10. Procédé de fonctionnement d'une éolienne (10) comprenant un dispositif de commande (20) relié à un réseau de données (30) et une unité d'affichage (22), comportant les étapes suivantes :
- la génération d'un code de confirmation incohérent et venant à expiration par le dispositif de commande (20) et le fait de délivrer le code de confirmation généré sur l'unité d'affichage (22) ; et
- lors de la réception par le dispositif de commande (20) d'une instruction de commande devant être confirmée, la vérification par le dispositif de commande (20) du fait de savoir si l'instruction de commande est confirmée par la réception, par l'intermédiaire du réseau de données (30), d'un code de confirmation encore valable, préalablement délivré par l'unité d'affichage (22), et si oui, l'exécution de l'instruction de commande par le dispositif de commande (20).

11. Procédé selon la revendication 10,
**caractérisé en ce qu'**un nouveau code de confirmation est généré à intervalles de temps réguliers et est délivré sur l'unité d'affichage (22), dans lequel une instruction de commande ne peut être confirmée que par le code de confirmation actuellement affiché et, de préférence, par le code de confirmation affiché avant la génération d'un nouveau code de confirmation sur la base d'une spécification de temps.

12. Procédé selon la revendication 10 ou 11,
**caractérisé en ce que**, lors de la réception d'un code de confirmation par le dispositif de commande (20), un nouveau code de confirmation est généré par l'intermédiaire du réseau de données (30) et est délivré sur l'unité d'affichage (22), dans lequel une instruction de commande ne peut être confirmée, de préférence après la génération d'un nouveau code de confirmation sur la base de la réception d'un code de confirmation, que par le code de confirmation actuellement affiché.

13. Procédé selon l'une des revendications 10 à 12,
**caractérisé en ce qu'**un code de confirmation est délivré sur l'unité d'affichage (22) lors de la réception par le dispositif de commande (20) d'un instruction de commande devant être confirmée, dans lequel l'instruction de commande est considérée comme étant confirmée lorsque le code de confirmation est reçu par le dispositif de commande (30) par l'intermédiaire du réseau de données (30) en moins d'une période de temps prédéterminée.

14. Procédé selon l'une des revendications 10 à 13,
**caractérisé en ce qu'**une instruction de commande est considérée comme étant confirmée lorsque le code de confirmation est reçu par le dispositif de commande (20) en même temps ou en moins d'une période de temps prédéterminée par rapport à la réception de l'instruction de commande.

15. Produit de programme informatique comprenant des parties de programme qui, lorsqu'elles sont chargées dans un ordinateur, de préférence un dispositif de commande (20) d'une éolienne (10), sont conçues pour mettre en œuvre le procédé selon l'une des revendications 10 à 14.
